# EUROPEAN PATENT APPLICATION

(11) **EP 4 748 659 A1**
(43) Date of publication of application: **27.05.2026**
(21) Application number: 25836662.4
(22) Date of filing: 27.05.2025
(51) Int. Cl.: B60R 25/40, B60R 25/04

(54) **VEHICLE-MOUNTED DEVICE**

(30) Priority: 09.07.2024 JP 2024110458
(71) Applicant: Global Mobility Service Inc., Tokyo 101-0035 (JP)
(72) Inventor: HASHIMOTO, Nobuyuki, Tokyo 101-0035 (JP); IWATA, Yukinori, Tokyo 101-0035 (JP); NAKASHIMA, Tokushi, Tokyo 101-0035 (JP)
(74) Representative: Hoffmann Eitle
(86) International application number: PCT/JP2025/019195
(87) International publication number: WO 2026/014097

(57) **Abstract**

The object of the present invention is to reduce power consumption of an external battery in an external relay or the like. An on-vehicle device (10) according to an embodiment includes: a detector unit (11) detects whether a room lamp (2) of a vehicle (1) has been turned on; and a control unit (12), when the on-vehicle device (10) is in a sleep state and if the detection unit (11) detects that the room lamp (2) has been turned on, turns on the on-vehicle device (10) and open a normally closed external relay (20) of the vehicle (1) to prevent an engine of the vehicle (1) being activated.

## Description

### TECHNICAL FIELD

The present invention relates to an on-vehicle device.

### BACKGROUND ART

In the conventional automobile sales and leasing industries, vehicles could not be obtained unless strict financial credit examinations were passed. However, nowadays, there has been proposed a service in which a vehicle is provided, without conducting a credit examination, to a person who has payment ability but has not passed the conventional credit examination, and if the person does not pay a usage fee (e.g., a monthly fee) within a predetermined period, the vehicle is remotely stopped, the location of the vehicle is specified, and the vehicle is collected.

As a system for realizing such a service, Patent Literature 1 discloses a system in which an on-vehicle device with a remote control function including a relay input/output unit that controls an external relay that switches a vehicle between an inactivatable state and an activatable state is mounted on the vehicle, and the external relay is controlled to perform activation restriction on the vehicle by remote control if a user does not pay a usage fee within a predetermined period or if theft of the vehicle is detected.

### CITATION LIST

### PATENT LITERATURE

Patent Literature 1: Japanese Patent No. 6238038

### SUMMARY OF THE INVENTION

In Patent Literature 1, when the on-vehicle device receives a command for switching from a state in which the vehicle is activatable to a state in which the vehicle is inactivatable, the relay input/output unit switches the external relay of the vehicle to the state in which the vehicle is inactivatable.

Here, when the external relay is closed, the vehicle is in the activatable state, and when the external relay is opened, the vehicle is in the inactivatable state.

For example, in a case where the external relay is of a normally closed type, when power is not supplied to the excitation coil of the external relay, the vehicle is in the activatable state, and when power is supplied to the excitation coil of the external relay, the vehicle is in the inactivatable state.

However, when the vehicle is switched to the inactivatable state, power is always supplied to the excitation coil of the external relay even when the engine is not activated. Therefore, the external relay is consuming power, which has a problem in that power of the external battery is consumed by the current to the excitation coil that controls the external relay in a state where the engine is not activated.

Therefore, the present invention has been made in view of the above-described problem, and an object of the present invention is to provide an on-vehicle device capable of reducing power consumption of an external battery in an external relay or the like.

### SOLUTION TO PROBLEM

An on-vehicle device according to an embodiment is summarized as an on-vehicle device mounted on a vehicle, the on-vehicle device including: a detector unit configured to detect whether a room lamp of the vehicle has been turned on; and a control unit configured to, when the on-vehicle device is in a sleep state and if the detection unit detects that the room lamp has been turned on, turn on the on-vehicle device and open a normally closed external relay of the vehicle to prevent an engine of the vehicle being activated.

### ADVANTAGEOUS EFFECTS OF THE INVENTION

According to the present invention, it is possible to an on-vehicle device capable of reducing power consumption of an external battery in an external relay or the like.

### BRIEF DESCRIPTION OF THE DRAWINGS

Fig. 1 is a diagram illustrating an example of functional blocks of an on-vehicle device 10 according to a first embodiment.
Fig. 2 is a flowchart illustrating an example of an operation of the on-vehicle device 10 according to the first embodiment.

### DETAILED DESCRIPTION

Hereinafter, preferred embodiments of the present invention will be described in detail with reference to the accompanying drawings. In the following description of the drawings, the same or similar parts are denoted by the same or similar reference numerals. However, it should be noted that the drawings are schematic, and ratios of dimensions and the like are different from actual ones. Therefore, specific dimensions and the like should be determined in consideration of the following description. In addition, the drawings may include portions having different dimensional relationships and ratios. In the present specification and the drawings, elements having substantially the same function and configuration are denoted by the same reference numerals, and redundant description is omitted, and elements not directly related to the present invention are not illustrated.

### (First Embodiment)

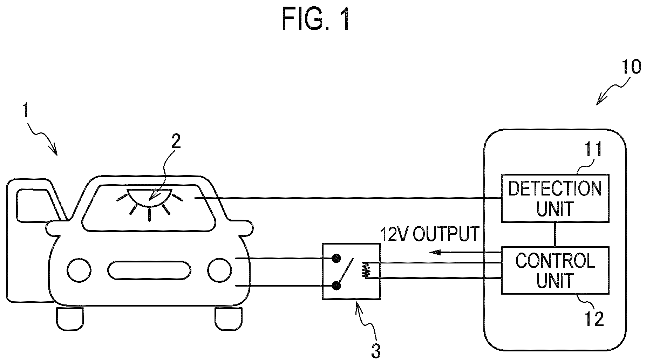

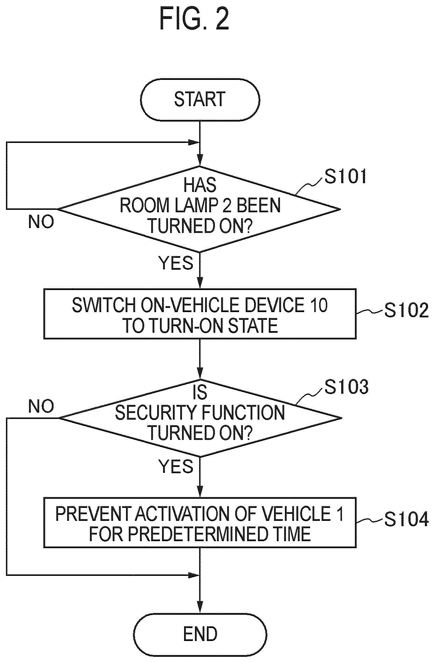

An on-vehicle device 10 according to the first embodiment of the present invention will be described below with reference to Figs. 1 and 2.

Fig. 1 is a diagram illustrating an example of functional blocks of the on-vehicle device 10 according to the present embodiment, and Fig. 2 is a flowchart illustrating an example of an operation of the on-vehicle device 10 according to the present embodiment.

Here, one on-vehicle device 10 is installed in one vehicle 1. The installation location of the on-vehicle device 10 in the vehicle 1 may be any location within the vehicle 1. In a case where the on-vehicle device 10 is retrofitted, the on-vehicle device 10 can be placed in a place where installation work is easy, such as under a passenger seat. Further, from the viewpoint of theft prevention, the on-vehicle device 10 can be placed in a place where it is difficult to remove the on-vehicle device 10, for example, in a lower portion of an engine room or inside an instrument panel. Further, the on-vehicle device 10 can be built in advance at the time of manufacturing the vehicle 1.

As illustrated in Fig. 1, an input line (e.g., a GPIO) of the on-vehicle device 10 is connected to a room lamp 2 of the vehicle 1.

As illustrated in Fig. 1, the on-vehicle device 10 has a configuration capable of supplying power to a normally closed external relay 20 of the vehicle 1.

As illustrated in Fig. 1, on-vehicle device 10 includes a detection unit 11 and a control unit 12.

The detection unit 11 detects that the room lamp 2 of the vehicle 1 has been turned on, via the above-described input line, based on any one of the following events: (1) when the door of the vehicle 1 is opened, (2) when the door of the vehicle 1 is unlocked, and (3) when it is recognized that the smart key is inside or near the vehicle 1.

When the on-vehicle device 10 is in a sleep state and if the detection unit 11 detects that the room lamp 2 has been turned on, the control unit 12 turns on the on-vehicle device 10, opens the external relay 20, and prevents the engine of the vehicle 1 from being activated.

In the present embodiment, when the vehicle 1 is not in use, the on-vehicle device 10 is set to the sleep state for energy saving, and the external relay 20 is not supplied with power from the on-vehicle device 10 and is in a closed state.

According to this configuration, when the engine of the vehicle 1 is not activated, the on-vehicle device 10 enters the sleep state, and the external relay 20 enters the closed state, so that the power consumption of the external battery can be reduced.

In addition, it takes a little time for the on-vehicle device 10 to switch from the sleep state to the turn-on state and the external relay 20 is switched from the closed state to the opened state, and the activation of the engine of the vehicle 1 is not prevented and the vehicle 1 is in an activatable state during the switching time.

Therefore, for example, if the execution of the engine activating operation (e.g., stepping on the brake) serves as a trigger for switching the on-vehicle device 10 from the sleep state to the turn-on state and switching the external relay 20 from the closed state to the opened state, a malicious third party can activate the engine and steal the vehicle during this switching time.

In contrast, according to the configuration of the present embodiment, the opening of the door of the vehicle 1 (the turning-on of the room lamp 2 of the vehicle 1) serves as a trigger for switching the on-vehicle device 10 from the sleep state to the turn-on state and switching the external relay 20 from the closed state to the opened state, that is, the above-described switching time is started after the door of the vehicle 1 is opened, which shortens the time allowed for a malicious third party to activate the engine as compared with that in the configuration in which the execution of the engine activating operation serves as a trigger, thereby obtaining a theft prevention effect.

When the on-vehicle device 10 is in the sleep state and if the detection unit 11 detects that the room lamp 2 has been turned-on, the control unit 12 may prevent the engine of the vehicle 1 from being activated only for a predetermined time after the on-vehicle device 10 is switched to the turn-on state. Here, the predetermined time may be changeable. Furthermore, the predetermined time may be changeable by remote control using an application of a smartphone or the like. Furthermore, the predetermined time may be settable in units of minutes.

Since people tend to give up stealing the vehicle 1 if it takes a long time, setting the predetermined time to be longer improves the theft prevention effect. On the other hand, there is also a demand from the owner of the vehicle 1 to shorten the predetermined time to enable the engine to be activated quickly when using the vehicle 1. In this manner, there is a trade-off relationship between the theft prevention effect (the time for theft prevention) and enabling the engine to be activated quickly (the time during which the owner of the vehicle 1 cannot start the engine).

Therefore, according to the above-described configuration, the owner of the vehicle 1 can arbitrarily set the predetermined time, and the need of the owner of the vehicle 1 can be satisfied.

That is, the control unit 12 may be configured such that, in a case where the security function is set to a turn-on state, when the detection unit 11 detects that the room lamp 2 has been turned on, the on-vehicle device 10 transitions from the sleep state to the turn-on state, and the external relay 20 is switched to the opened state only for a predetermined time to prevent the engine of the vehicle 1 from being activated.

On the other hand, the control unit 12 may be configured such that, in a case where the security function is set to a turn-off state, when the detection unit 11 detects that the room lamp 2 has been turned on, even if the on-vehicle device 10 transitions from the sleep state to the turn-on state, the external relay 20 is kept in the closed state to allow the engine of the vehicle 1 to be activated.

Further, the on-vehicle device 10 may automatically switch to the sleep state after a predetermined time elapses from the switch from the sleep state to the turn-on state.

Note that the security function can be set to the turn-on state or to the turn-off state by remote control using an application of a smartphone or the like.

According to such a configuration, by controlling the security function to be turned on or off, a trade-off relationship between the time for theft prevention and the time during which the owner of the vehicle 1 cannot start the engine can be adjusted according to the need of the owner of the vehicle 1.

Hereinafter, an example of an operation of the on-vehicle device 10 according to the embodiment will be described with reference to Fig. 2.

As illustrated in Fig. 2, in step S101, the control unit 12 determines, through the detection unit 11, whether the room lamp 2 of the vehicle 1 has been turned on.

When the control unit 12 determines that the room lamp 2 of the vehicle 1 has been turned on, the present operation proceeds to step S102.

In step S102, the control unit 12 switches the on-vehicle device 10 from a sleep state to a turn-on state.

In step S103, the control unit 12 determines whether the security function is turned on or off.

When the security function is turned on, the operation proceeds to step S104, and when the security function is turned off, the operation ends.

In step S104, the control unit 12 switches the external relay 20 to the opened state, to prevent the vehicle 1 from being activated, for a predetermined time after the on-vehicle device 10 is turned on.

According to the present embodiment, it is possible to reduce the power consumption of the external battery in the external relay 20, and it is possible to obtain a greater theft prevention effect as compared with the configuration in which the execution of the engine activating operation is used as a trigger for preventing the vehicle 1 from being activated.

Although the present invention has been described in detail using the above-described embodiments, it is apparent to those skilled in the art that the present invention is not limited to the embodiments described herein. The present invention can be implemented as modifications and variations without departing from the spirit and scope of the present invention defined by the description of the claims. Therefore, the description of the present specification is for the purpose of illustration and does not have any restrictive meaning to the present invention.

### REFERENCE SIGNS LIST

- 1: Vehicle
- 2: Room lamp
- 3: External relay
- 10: On-vehicle device
- 11: Detection unit
- 12: Control unit

## Claims

1. An on-vehicle device mounted on a vehicle, the on-vehicle device comprising:
a detector unit configured to detect whether a room lamp of the vehicle has been turned on; and
a control unit configured to, when the on-vehicle device is in a sleep state and if the detection unit detects that the room lamp has been turned on, turn on the on-vehicle device and open a normally closed external relay of the vehicle to prevent an engine of the vehicle being activated.

2. The on-vehicle device according to claim 1, wherein
when the on-vehicle device is in the sleep state and if the detection unit detects that the room lamp has been turned on, the control unit prevents the engine of the vehicle from being activated only for a predetermined time after the on-vehicle device is switched to the turn-on state.

3. The on-vehicle device according to claim 2, wherein the predetermined time is changeable.

4. The on-vehicle device according to claim 2, wherein
in a case where a security function is set to a turn-on state, when the on-vehicle device is in the sleep state, if the detection unit detects that the room lamp has been turned on, the control unit prevents the engine of the vehicle from being activated only for the predetermined time, and
in a case where the security function is set to a turn-off state, when the on-vehicle device is in the sleep state, even if the detection unit detects that the room lamp has been turned on, the control unit does not prevent the engine of the vehicle from being activated.

5. The on-vehicle device according to claim 4, wherein
the security function can be set to the turn-on state or to the turn-off state by remote control.
